Europäisches Patentamt

European Patent Office

Office européen des brevets

(19)

(11) **EP 0 555 739 B1**

(12) **EUROPÄISCHE PATENTSCHRIFT**

(45) Veröffentlichungstag und Bekanntmachung des Hinweises auf die Patenterteilung:
**20.05.1998 Patentblatt 1998/21**

(51) Int Cl.⁶: **G01N 35/10, G01N 1/00**

(21) Anmeldenummer: **93101603.4**

(22) Anmeldetag: **03.02.1993**

(54) **Automatische Pipettiervorrichtung**

Automatic pipetting device

Dispositif automatique de pipettage

(84) Benannte Vertragsstaaten:
**BE CH DE DK ES FR GB GR IE IT LI LU NL PT**

(30) Priorität: **13.02.1992 CH 428/92**

(43) Veröffentlichungstag der Anmeldung:
**18.08.1993 Patentblatt 1993/33**

(73) Patentinhaber: **F. HOFFMANN-LA ROCHE AG**
**4002 Basel (CH)**

(72) Erfinder: **Bühler, Jürg**
**CH-6023 Rothenburg (CH)**

(74) Vertreter: **AMMANN PATENTANWÄLTE AG BERN**
**AMMANN INGENIEURS-CONSEILS EN**
**PROPRIETE INTELLECTUELLE SA BERNE**
**AMMANN PATENT ATTORNEYS LTD BERNE**
**Schwarztorstrasse 31**
**Postfach**
**3001 Bern (CH)**

(56) Entgegenhaltungen:
EP-A- 0 252 471   WO-A-87/06008
WO-A-91/16675   WO-A-92/15017
DE-A- 4 113 377

- PATENT ABSTRACTS OF JAPAN vol. 15, no. 36 (E-1027)29. Januar 1991 & JP-A-2 275 700 ( MATSUSHITA ELECTRIC IND CO LTD ) 9. November 1990
- PATENT ABSTRACTS OF JAPAN vol. 14, no. 498 (P-1124)30. Oktober 1990 & JP-A-2 203 269 ( SHIMADZU CORP ) 13. August 1990
- PATENT ABSTRACTS OF JAPAN vol. 15, no. 33 (P-1158)25. Januar 1991 & JP-A-2 272 604 ( MATSUSHITA ELECTRIC IND CO LTD ) 7. November 1990
- PATENT ABSTRACTS OF JAPAN vol. 8, no. 164 (M-313)28. Juli 1984 & JP-A-59 059 337 ( NIIGATA TEKKOSHO K K ) 5. April 1984

## Beschreibung

Die Erfindung betrifft eine Pipettiervorrichtung eines automatischen Analysengerätes, welche Pipettiervorrichtung folgende Komponenten enthält: eine mit einer Dosiervorrichtung verbundenen Pipettiernadel zur Uebertragung von einem Flüssigkeitsvolumen von einem Primärgefäss zu einem Sekundärgefäss, wobei das Primärgefäss bzw. das Sekundärgefäss auf derselben oder auf verschiedenen Gefässträgereinheiten angeordnet sind, wobei eine der Gefässträgereinheiten auf eine Arbeitsfläche des Analysengerätes positionierbar und davon abnehmbar ist, und wobei jedes Gefäss in bezug auf die es tragende Gefässträgereinheit eine bestimmte, eindeutig definierte Position hat, eine Transportvorrichtung zum gesteuerten Transport der Pipettiernadel in drei zueinander senkrechten Richtungen, und eine Steuereinrichtung zur Steuerung der Dosiervorrichtung und der Transportvorrichtung.

Die Erfindung betrifft ferner ein Verfahren zum automatischen Transport einer Pipettiernadel einer automatischen Pipettiervorrichtung eines automatischen Analysengerätes zu einer Anzahl Pipettierpositionen mittels einer Transportvorrichtung, wobei jede Pipettierposition der Position eines bestimmten Gefässes entspricht, das in der Pipettiervorrichtung auf einer Gefässträgereinheit angeordnet wird, welche auf eine Arbeitsfläche des Analysengerätes positionierbar und davon abnehmbar ist, wobei die Transportvorrichtung dazu eingerichtet ist, die Pipettiernadel in drei zueinander senkrechten Richtungen zu bewegen, und wobei jede dieser Richtungen parallel zu einer der Koordinatenachsen des Koordinatensystems der Transportvorrichtung ist.

Die Erfindung betrifft insbesondere eine Pipettiervorrichtung, die Bestandteil eines automatischen Analysengerätes ist, z.B. ein Analysengerät zur Durchführung von Analysen biologischer Proben.

Ein typischer Pipettiervorgang in einem automatischen Analysengerät ist z.B. die Entnahme eines bestimmten Reagenzvolumens aus einem Primärgefäss, z.B. einem Reagenzbehälter, und dessen Abgabe an einem Sekundärgefäss, z.B. einem Reaktionsgefäss. Dabei führt eine Transportvorrichtung die Pipettiernadel von einer Zielposition zur nächsten. In jeder Zielposition bewirkt die automatisch gesteuerte Dosiervorrichtung die gewünschte Entnahme oder Abgabe eines Flüssigkeitsvolumens.

Im dreidimensionalen, rechtwinkligen Koordinatensystem der Transportvorrichtung sind die Primär- bzw. Sekundärgefässe in Gefässbehälter auf Gefässträgereinheiten angeordnet, die parallel zur XY-Ebene des Koordinatensystems sind. Wenn die Transportvorrichtung die Pipettiernadel zu einer Zielposition führt, bewegt diese Vorrichtung die Pipettiernadel zunächst in einer zur XY-Ebene parallelen Ebene bis sie oberhalb des Zielgefässes liegt und bewirkt anschliessend eine Abwärtsbewegung der Pipettiernadel bis diese in der Richtigen Lage für eine Flüssigkeitsentnahme aus einem Primärgefäss bzw. eine Flüssigkeitsabgabe in ein Sekundärgefäss befindet.

Damit die Transportvorrichtung die Pipettiernadel zur einer genau richtigen Zielposition in der XY-Ebene, d.h. genau oberhalb eines Primär- bzw. Sekundärgefässes, führen kann, müssen in bisher bekannten Pipettiervorrichtungen folgende Bedingungen erfüllt sein:

- die Steuereinrichtung der Transportvorrichtung muss die X- und Y-Koordinaten der Zielposition als Eingangssignal erhalten, um die Transportvorrichtung entsprechend steuern zu können,
- das Primär- bzw. Sekundärgefäss muss sich an der genau richtigen Stelle befinden,
- die Pipettiernadel muss gerade sein, d.h. sie darf keine Deformation aufweisen, und
- die Transportvorrichtung muss in jeder Transportrichtung justiert sein, d.h. in jeder Transportrichtung muss eine Position definiert werden, die als Bezugsposition gilt.

Zur Justierung der Transportvorrichtung der Pipettiernadel wird bei bisher bekannten Pipettiervorrichtungen der oben genannten Art für jede Transportrichtung eine manuelle Justierung der Bezugsposition eines der Glieder der Vorrichtung zum Transport der Pipettiernadel durchgeführt. Das bekannte Justierverfahren basiert auf dem Einstellen der Position von mechanischen Teilen der Transportsvorrichtung in bezug auf Bezugspunkte, deren Lagen, Nullpositionen genannt, z.B. mittels Lichtschranken definiert werden. Eine solche Nullposition muss für jede Transportrichtung definiert werden. Die Nullpositionen müssen ebenfalls justiert werden, bis der Abstand der Lichtschranke zu den Primärgefässen einen definierten Wert haben. Bei der Benutzung des Geräts werden die erwähnten mechanischen Teile jedesmal beim Anschalten des Gerätes automatisch auf ihre Nullpositionen gefahren.

Dieses bekannte Justierverfahren hat folgende Nachteile:

- Die Grundjustierung der Transportvorrichtung der Pipettiernadel bei der Montage des Gerätes erfordert einen relativ hohen Arbeits- und Zeitaufwand.

- Mögliche Deformationen der Pipettiernadel, die innerhalb deren Benutzungsdauer eintreten können, können von diesem Justierverfahren nicht berücksichtigt werden, d.h. trotz sehr genauer Justierung der Bezugsposition der erwähnten Glieder der Transportvorrichtung kann man nicht vermeiden, dass eine leicht verbogene Pipettiernadel ihr Ziel verfehlt.

- Die Genauigkeit der Justierung der Nullpositionen nimmt mit der Alterung der Lichtquellen der Lichtschranken ab. Die Lichtstärke und die Breite des Lichtstrahls ändern sich mit dem Alter der Lichtquelle. Die Folge ist eine entsprechende Aenderung der Lage der Nullpositionen. Um diesem Umstand Rechnung zu tragen, und um einen zuverlässigen Betrieb der Pipettiervorrichtung sicherzustellen, ist es erforderlich, die Nullpositionen nach einigen Jahren von einem Servicetechniker nachjustieren zu lassen. Auch diese Nachjustierung erfordert einen relativ hohen Arbeits- und Zeitaufwand erfordert.

- Die Genauigkeit, die sich mit der bekannten Justierung der Bezugsposition erreichen lässt, ist durch den Umstand begrenzt, dass zwischen dem Glied, dessen Bezugsposition justiert wird, und die Pipettiernadel mehrere mechanische Elemente eingeschaltet sind. Die Genauigkeit, die bei der Positionierung der Pipettiernadel mit der Transportvorrichtung erreichbar ist, ist daher durch die Summe der üblichen Abweichungen der Abmessungen dieser Elemente sowie der Zwischenräume zwischen diesen Elementen begrenzt.

Das bekannte Justierverfahren ist daher für Pipettiervorrichtungen ungeeignet, bei denen eine sehr genaue Justierung der Transportvorrichtung der Pipettiernadel notwendig ist und bei denen eine manuelle Justierungsarbeit unerwünscht ist. Dies ist z.B. bei Pipettiervorrichtungen von modernen automatischen Analysengeräten der Fall. Da bei diesen eine relativ grosse Zahl von Primärgefässen in einem relativ kleinem Raum angeordnet werden soll, ist für eine zuverlässige Durchführung der Pipettiervorgänge unerlässlich, eine genaue Positionierung der Pipettiernadel in Bezug auf die einzelnen Primär- bzw. Sekundärgefässe sicherzustellen. Diese genaue Positionierung sollte ausserdem mit möglichst geringem Arbeitsaufwand erzielt werden.

Die Internationale Patentanmeldung mit Publikationsnummer WO 91/16675 beschreibt eine automatische Pipettiervorrichtung , bei der Gefässträgereinheiten je eine Anordnung von Gefässen tragen, wobei jede Gefässträgereinheit auf eine vorbestimmte, definierte Position auf einer Arbeitsfläche angeordnet ist, und wobei auf einer bestimmten Stelle der Arbeitsfläche ein einziger Bezugskörper vorgesehen ist, der fest und unmittelbar mit der Arbeitsfläche verbunden ist, und der zur Justierung des Transportsystems der Pipettiernadel dient. Dabei ist die Pipettiernadel mit einer Sensorschaltung verbunden. Zur Justierung des Transportsystems der Pipettiernadel wird diese zur Erfassung der Position der Wände des einzigen Bezugskörpers verwendet. Ein wichtiger Nachteil dieser Vorrichtung ist, dass die erreichbare Genauigkeit der Justierung durch die mechanischen Toleranzen zwischen dem einzigen Bezugskörper und die einzelnen Pipettierpositionen und durch den Umstand beschränkt ist , dass eine etwas ungenaue Positionierung der Gefässträgereinheiten oder eine Deformation der Pipettiernadel bei der Justierung unberücksichtigt bleiben. In einem System, dass auf eine sehr genauen Justierung angewiesen ist, sind die Folgen einer ungenauen Justierung katastrophal. Eine aus diesem Grund fehl geführte Pipettiernadel verfehlt nicht nur ihre Zielobjekte, sie beschädigt andere Systemkomponenten wie Reaktionsküvetten und Reagenzbehälter. Dabei kann ausserdem die Pipettiernadel selbst beschädigt (deformiert) und sogar gebrochen werden.

Der Erfindung liegt daher die Aufgabe zugrunde, eine Pipettiervorrichtung der eingangs angegebenen Art zur Verfügung zu stellen, mit der die oben erwähnten Nachteile behoben werden können, d.h. eine Pipettiervorrichtung zur Verfügung zu stellen, die so eingerichtet ist, dass einen genauen Transport der Pipettiernadel zu Zielpositionen sichergestellt ist. Der Erfindung liegt ferner die Aufgabe zugrunde ein Verfahren zum automatischen Transport der Pipettiernadel einer automatischen Pipettiervorrichtung der eingangs angegebenen Art zur Verfügung zustellen, mit der das soeben definierte Ziel erreichbar ist.

Der erste Teil der obigen Aufgabe wird erfindungsgemäss mit einer Pipettiervorrichtung der eingangs erwähnten Art gelöst, die dadurch gekennzeichnet ist, dass in der Pipettiervorrichtung folgende zusätzliche Komponenten vorgesehen sind:

a) wenigstens zwei verschiedene Bezugskörper an der einen Gefässträgereinheit und wenigstens ein Bezugskörper an der anderen Gefässträgereinheit, wobei die Bezugskörper ein Teilstück der Gefässträgereinheit sind oder unmittelbar und fest damit verbunden sind, und
wobei jedes der wenigstens zwei Bezugskörper drei zueinander senkrechte ebene Flächen hat, die einer Abtastung mit der Pipettiernadel zugänglich sind, wobei die Position jeder solchen Fläche die Koordinate eines Bezugspunkts in einer der Transportrichtungen definiert,
b) eine in der Steuereinrichtung enthaltene Steuerung, die dazu dient, einen Transport der Pipettiernadel zu jeder der je einen Bezugspunkt bestimmenden Flächen der wenigstens zwei Bezugskörper zu bewirken, und
c) Mittel zur Erfassung eines Kontakts der Pipettiernadel mit jeder der je einen Bezugspunkt bestimmenden Flächen der wenigstens zwei Bezugskörper.

Der zweite Teil der obigen Aufgabe wird erfindungsgemäss mit einem Verfahren der eingangs erwähnten Art gelöst, das dadurch gekennzeichnet ist, dass

i) wenigstens zwei verschiedene Bezugskörper verwendet werden, um die Koordinaten der Pipettierpositionen für eine gegebene Lage der Gefässträgereinheit in der Pipettiervorrichtung zu ermitteln, und dass ebene Flächen der wenigstens zwei Bezugskörper mit der Pipettiernadel abgetastet werden, um Koordinaten von Bezugspunkten zu messen, wobei die wenigstens zwei verschiedenen Bezugskörper ein Teilstück der Gefässträgereinheit sind oder unmittelbar und fest damit verbunden sind,

wobei jedes der wenigstens zwei Bezugskörper drei zueinander senkrechte ebene Flächen hat, die einer Abtastung mit der Pipettiernadel zugänglich sind, wobei die Position jeder solchen Fläche die Koordinate eines Bezugspunkts in einer der Transportrichtungen definiert, und

ii) es folgende Schritte umfasst:

a) Positionierung einer Gefässträgereinheit auf der Arbeitsfläche des Analysengeräts,

b) Messung von Koordinaten von Bezugspunkten, die durch die Positionen der Flächen von wenigstens zwei Bezugskörpern für eine gegebene Lage der Gefässträgereinheit in der Pipettiervorrichtung definiert sind, wobei zur Durchführung der Messung die Transportvorrichtung veranlasst wird, die Pipettiernadel zu Flächen der Bezugskörper zu führen, bis sie diese Flächen berührt, worauf ein Signal erzeugt wird, das diese Berührung signalisiert, und dieses Signal verwendet wird, um ein Koordinatenwert des Bezugspunkts zu erzeugen und zu speichern,

c) Berechnung der Koordinaten von jeder Pipettierposition der Pipettiernadel in Funktion der gemessenen Koordinaten der Bezugspunkte,

d) Speicherung der berechneten Koordinatenwerte jeder Pipettierposition für die gegebene Lage der Gefässträgereinheit,

e) Verwendung der gespeicherten Koordinatenwerte jeder Pipettierposition zur Steuerung der Transportvorrichtung wenn diese zum Transport der Pipettiernadel zu einer bestimmten Pipettierposition benutzt wird.

Die wesentlichen Vorteile der erfindungsgemässen Pipettiervorrichtung bzw. des erfindungsgemässen Verfahrens sind wie folgt:

- Die Bezugsposition der Transportvorrichtung der Pipettiernadel wird in jeder Transportrichtung (X, Y, Z) sehr genau justiert, weil die Erfassung der Position der Bezugspunkte für die Transportvorrichtung mit der Pipettiernadel selbst vorgenommen wird, und weil jeder Bezugskörper einen Teil einer Gefässträgereinheit oder fest und unmittelbar mit ihr verbunden ist, so dass die Positionen der Bezugspunkte in Bezug auf die Zielpositionen der Pipettiernadel eindeutig definiert und unveränderlich sind.

- Mögliche, geringe Deformationen der Pipettiernadel haben keinen Einfluss auf die Genauigkeit der Justierung der Bezugsposition. Nach einer erfindungsgemässen Justierung der Transportvorrichtung der Pipettiernadel erreicht auch eine leicht verbogene Pipettiernadel ihr Ziel mit grosser Präzision.

- Auch eine etwas ungenaue Positionierung der Gefässträgereinheit im Analysengerät oder der Umstand, dass eine genaue Parallelität der tragenden Schienen des Transportsystems nicht erreicht wird, haben keinen Einfluss auf die Genauigkeit der Justierung der Transportvorrichtung der Pipettiernadel.

- Die erfindungsgemässe Justierung der Transportvorrichtung der Pipettiernadel ist völlig automatisch durchführbar. Sie erfordert daher überhaupt keinen manuellen Arbeitsaufwand.

Ein Ausführungsbeispiel der Erfindung wird im folgenden anhand der beiliegenden Zeichnungen beschrieben. Es zeigen:

Fig. 1        eine perspektivische Ansicht einer erfindungsgemässen Pipettiervorrichtung.

Fig. 2        eine perspektivische Ansicht der Trägerplatte 31 in Fig. 1 und einige darauf angeordnete Gefässbehälter 16.

Fig. 3        eine Draufsicht eines der Gefässbehälter 16 in Figuren 1 und 2.

Fig. 4        eine Druntersicht eines der Gefässbehälter 16 Figuren 1 und 2.

Fig. 5        eine Schnittansicht eines Gefässbehälters 16 und des entsprechenden Segments der darunterliegenden Trägerplatte 31 entlang der Linie S-S in Fig. 3.

Fig. 6        eine perspektivische Ansicht des Bezugskörpers 41 in Fig. 1.

Fig. 7-10    je eine schematische Darstellung der Bewegung der Pipettiernadel zu jeder der Flächen 51, 52, 53 des Bezugskörpers 41 gemäss Fig. 6.

Fig. 11    einen Längsschnitt der Pipettiernadel 11 in Fig. 1 und der dazugehörigen Verbindungen.

Fig. 12    einen schematischen Querschnitt einer bevorzugter Ausführungsform des Bezugskörpers 41 in Fig. 6.

Fig. 13    eine Draufsicht der Bearbeitungseinrichtung 29 in Fig. 1

Fig. 14    eine Draufsicht der Trägerplatte 31 in einer Position, bei der die Längsachse jedes der Gefässbehälter mit der y-Achse des Koordinatensystems der Transportvorrichtung der Pipettiernadel einen Winkel θ bildet.

Fig. 15    eine Draufsicht einer Variante der Pipettiervorrichtung gemäss Fig. 1

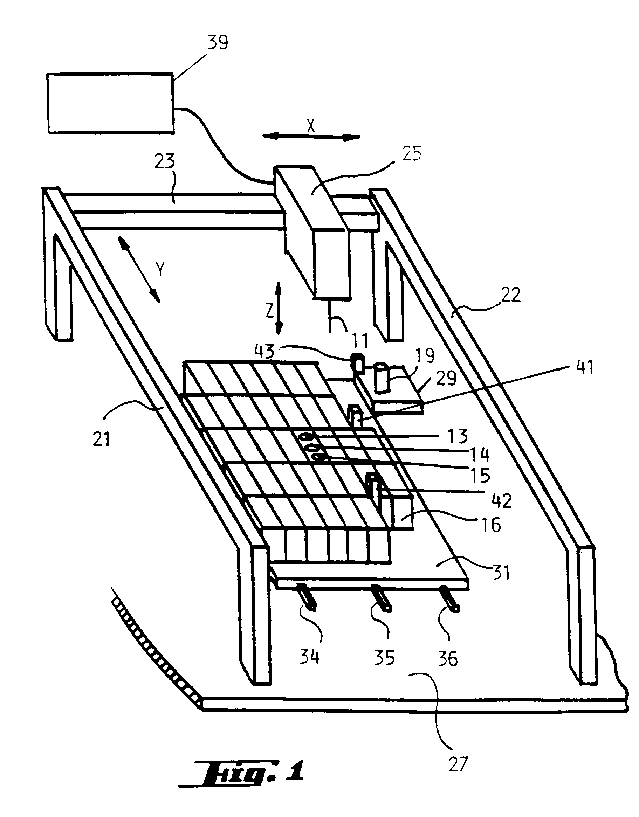

Wie in Fig. 1 schematisch gezeigt, enthält eine erfindungsgemässe Pipettiervorrichtung eine mit einer Dosiervorrichtung (in Fig. 1 nicht gezeigt) verbundenen Pipettiernadel 11 zur Uebertragung von Flüssigkeitsvolumina von Primärgefässen 13, 14, 15, die z.B. Reagenzbehälter sein können, zu einem oder mehreren Sekundärgefässen 19, die z.B. Reaktionsgefässe sein können, in denen z.B. eine biologische Probe mit einem Reagenz gemischt wird.

Die Dosiervorrichtung ist z.B. eine automatisch gesteuerte Dosierspritze, die im Wagen 25 enthalten ist und die durch einen Schlauch mit der Pipettiernadel verbunden ist.

Die Pipettiervorrichtung gemäss Fig. 1 enthält ferner eine Anordnung zum gesteuerten Transport der Pipettiernadel in drei zueinander senkrechten Richtungen X, Y, Z . Diese Anordnung umfasst einen Wagen 25, der die Pipettiernadel 11 trägt und einen Antrieb zur Bewegung der Nadel in Z-Richtung enthält. Der Wagen 25 ist durch einen geeigneten Antrieb in X-Richtung entlang der Schiene 23 bewegbar. Diese Schiene 23 ist durch einen geeigneten Antrieb in Y-Richtung entlang der Schienen 21 und 22 bewegbar.

Die Schienen 21,22 sind auf eine Grundplatte 27 befestigt. Auf diese Grundplatte ist eine Fläche vorgesehen, auf der die Trägerplatte 31 samt Primärgefässe gelegt werden soll. Um eine geeignete Positionierung der Trägerplatte 31 auf die Grundplatte 27 zu erleichtern, sind auf die Fläche 28 z.B. Führungsrippen 34,35,36 vorgesehen, die zu entsprechenden Nuten der Trägerplatte 31 passen.

Zur Steuerung der Dosiervorrichtung und der Anordnung zum Transport der Pipettiernadel enthält die Pipettiervorrichtung gemäss Fig. 1 eine Steuereinrichtung 39.

Mit der Vorrichtung gemäss Fig. 1 kann z.B. ein Reagenzvolumen von einem Reagenzbehälter 13 (Primärgefäss), der auf einer abnehmbaren Trägerplatte 31 (erste Gefässträgereinheit) angeordnet ist, zu einem Reaktionsgefäss 19 (Sekundärgefäss) pipettiert werden, das in einer Bearbeitungseinrichtung 29 (zweite Gefässträgereinheit) angeordnet ist.

Wie im obigen Ausführungsbeispiel können die Primärgefässe bzw. Sekundärgefässen auf verschiedenen Gefässträgereinheiten angeordnet sein. Beide Gefässe können aber auch in derselben Gefässträgereinheit angeordnet sein. In einer mit der Pipettiervorrichtung funktionell verbundenen Bearbeitungseinrichtung (Gefässträgereinheit) kann z.B. ein Probe-Reagenz-Gemisch von einem Reaktionsgefäss (Primärgefäss) zu einem anderen Reaktionsgefäss (Sekundärgefäss) pipettiert werden.

Im Rahmen der Erfindung können auch die Gefässträgereinheiten verschiedene Formen bzw. Funktionen haben. So z.B. kann ein sogenanntes Probenträgermodul (sample rack), das eine Anzahl von Proberöhrchen (sample cups) trägt, einer Gefässträgereinheit sein. Jede Gefässträgereinheit kann ausserdem ein Gefäss oder eine Vielzahl von Gefässen tragen.

Im Ausführungsbeispiel gemäss Fig. 1 sind die Trägerplatte 31 und die Bearbeitungseinrichtung 29 auf derselben Grundplatte 27 angeordnet, dies ist jedoch im Rahmen der Erfindung nicht notwendig.

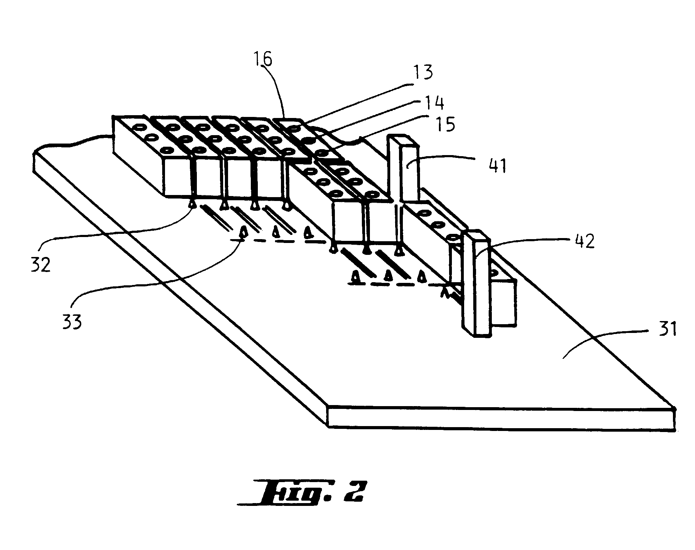

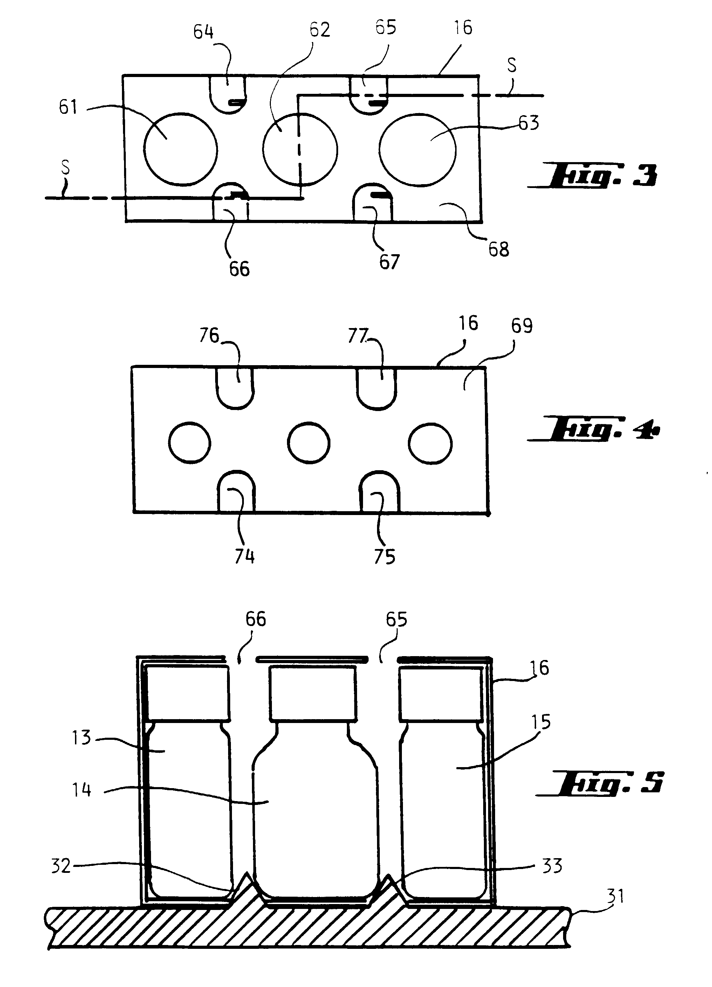

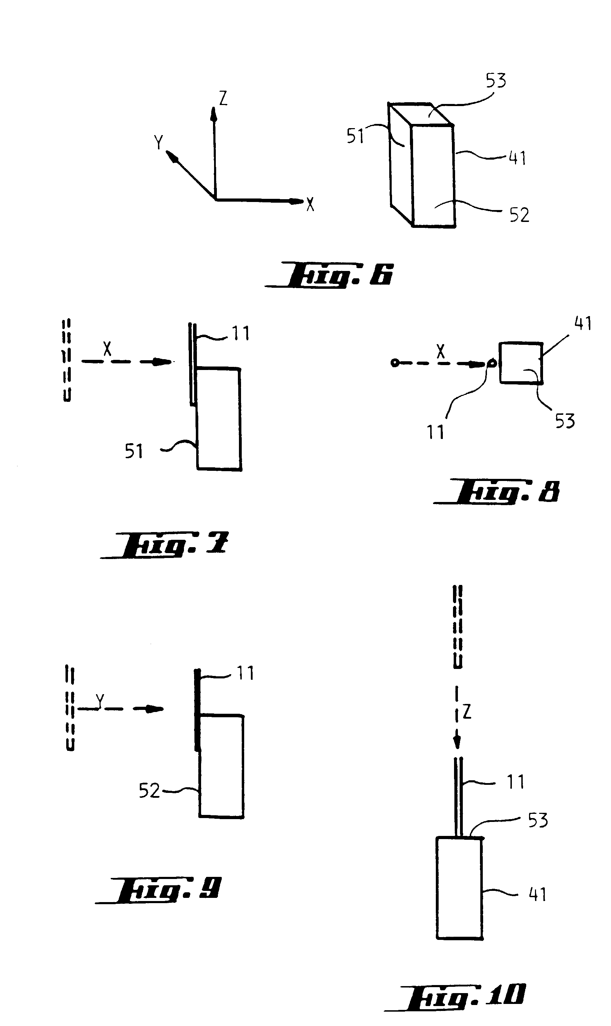

Wie in der Fig. 2 dargestellt, ist eine matrixartige Anordnung von Gefässbehältern 16 auf der Trägerplatte 31 angeordnet. Wie in der Fig. 5 gezeigt, enthält jeder der Gefässbehälter 16 drei Primärgefässe 13,14,15. Die Trägerplatte 31 hat eine Anordnung von Vorsprüngen 32,33, die mit den nachstehend anhand der Figuren 4 und 5 beschriebenen Oeffnungen 75,76 des Bodens 69 jedes der Gefässbehälter 16 zusammenwirken, um eine genaue Positionierung der Gefässbehälter 16 auf die Trägerplatte 31 und dadurch eine genaue Positionierung der Primärgefässe 13,14,15 auf diese Trägerplatte zu ermöglichen, so dass jedes dieser Primärgefasse eine bestimmte, eindeutige Position auf der Trägerplatte 31 einnimmt.

Figuren 3-5 zeigen einige Ansichten eines der Gefässbehälter 16 in Fig. 1. Dieser Behälter hat einen abnehmbaren Deckel 68. Wie aus der Draufsicht gemäss Fig. 3 ersichtlich, hat der Deckel 68 des Gefässbehälters 16 drei kreisförmige Oeffnungen 61,62,63, die je einen Zugang zu einem der im Gefässbehälter enthaltenen Primärgefässe bilden. Bei den Pipettiervorgängen wird die Pipettiernadel durch diese Oeffnungen und durch die durchstechbaren Deckel der Primärgefässe 13,14,15 eingeführt. Der Deckel 68 des Gefässbehälters 16 hat ausserdem Oeffungen 64,65,66,67. Der Boden 69 des Gefässbehälters 16 hat Oeffungen74, 75,76, 77 die zur Positionierung des Gefässbehälters 16 dienen.

Fig. 5 zeigt einen Querschnitt des Gefässbehälters entlang der Linie S-S in Fig. 3. Aus diesem Querschnitt ist die Anordnung der Primärgefässe 13,14,15 im Gefässbehälter 16 und die Zusammenwirkung der Oeffnungen 76 bzw. 75 mit Vorsprüngen 32 bzw. 33 der Trägerplatte 31 ersichtlich.

Zur automatischen Justierung der Bezugspositionen der Transportvorrichtung der Pipettiernadel sind in der erfindungsgemässen Pipettiervorrichtung gemäss Fig. 1 folgende zusätzliche Komponenten vorgesehen:

a) Pro Gefässträgereinheit 31,29 wenigstens ein Bezugskörper, der ein Teilstück der dazugehörigen Gefässträgereinheit 29 bzw. 31 ist, oder unmittelbar und fest damit verbunden ist, und der ebene Flächen hat, die einer Abtastung mit der Pipettiernadel zugänglich sind. Gemäss Fig. 1 hat die Bearbeitungseinrichtung 29 einen einzigen Bezugskörper 43 und die Trägerplatte 31 hat zwei Bezugskörper 41,42.

b) Eine in der Steuereinrichtung 39 enthaltene Steuerung, die dazu dient, einen Transport der Pipettiernadel zu jeder der je einen Bezugspunkt bestimmenden Flächen 51, 52 bzw. 53 jedes Bezugskörpers 41,42,43 zu bewirken.

c) In Fig. 1 nicht gezeigte Mittel zur Erfassung eines Kontakts der Pipettiernadel 11 mit jeder der je einen Bezugspunkt bestimmenden Flächen 51,52 bzw. 53 jedes Bezugskörpers 41,42,43. Die Mittel zur Erfassung solcher Kontakte sind vorzugsweise in der Steuereinrichtung 39 enthalten.

Wie in den Figuren 1, 2 und 6 für den Bezugskörper 41 dargestellt, hat jeder der im Rahmen der Erfindung verwendeten Bezugskörper, drei zueinander senkrechten Aussenflächen, wobei die Position jeder solchen Aussenfläche die Koordinate eines Bezugspunkts in einer der Transportrichtungen X, Y, Z definiert. Die Bezugskörper haben vorzugsweise die in den Figuren 1, 2 und 6 gezeigte Form. Als Bezugskörper können aber auch z.B. geeignete Flächen einer Bearbeitungseinrichtung oder andere Teile der Pipettiervorrichtung verwendet werden.

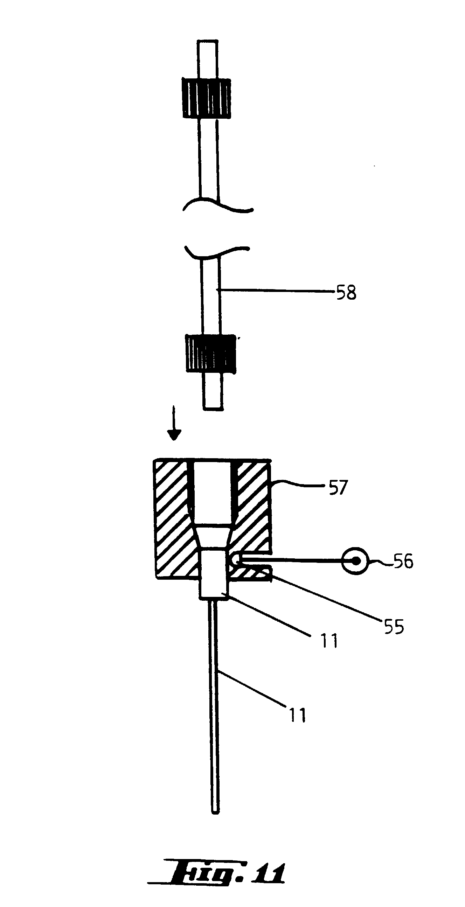

Fig. 11 zeigt einen Längsschnitt der Pipettiernadel 11 in Fig. 1 und der dazugehörigen Verbindungen. Die elektrisch leitende Pipettiernadel 11 wird von einem elektrisch nicht leitenden Verbindungsstück 57 gehalten, der z.B. aus einem Kunststoff ist. Ein daran anschliessbarer Schlauch 58 verbindet die Pipettiernadel mit der bereits erwähnten Dosiervorrichtung. In einer seitlichen Bohrung des Verbindungsstücks 57 befindet sich ein elektrisch leitendes Verbindungselement 55, das die Pipettiernadel 11 über einen Koaxialkabel mit einer Niveau-Fühleinrichtung verbindet. Mit einer solchen Einrichtung wird durch Messung von einer Aenderung der Impedanz zwischen der Pittiernadel und der elektrischen Masse der ganzen Vorrichtung ein elektrisches Signal erzeugt, das den Zeitpunkt markiert, zu dem die Pipettiernadel 11 bei ihrer Abwärtsbewegung die freie Oberfläche der Flüssigkeit in einem Behälter erreicht.

Im Rahmen der Erfindung wird die soeben erwähnte Niveau-Fühleinrichtung zusätzlich zur Erfassung eines Kontaktes der Pipettiernadel mit jeder der je eine Bezugsposition bestimmenden Flächen 51,52 bzw. 53 der Bezugskörper 41,42,43 verwendet, wenn zur Justierung des Transportsystems der Pipettiernadel 11 diese zu jeder dieser Flächen geführt wird, wie anhand der Figuren 7-10 schematisch gezeigt wird.

Fig. 8 zeigt eine Draufsicht der in Fig. 7 schematisch dargestellte Bewegung der Pipettiernadel 11 zur Fläche 51 des Bezugskörpers 41.

Zur Erfassung einer Bezugsposition in X-Richtung wird die Pipettiernadel vom Transportsystem mit einer relativ schnelle Bewegung zuerst zu einer ersten Position, in Fig. 7 gestrichelt markiert, und von dort in sehr kleinen Schritten und relativ langsam zur Fläche 51 geführt, bis die Berührung dieser Fläche mit der Pipettiernadel mit der Niveau-Fühleinrichtung erfasst wird. Wie aus Fig. 8 ersichtlich wird dabei die Pipettiernadel entlang einer Gerade geführt, die im Idealfall durch die Mitte des Bezugskörpers 41 verlauft. Dass die Pipettiernadel auf jeden Fall den Bezugskörper trifft, ist dadurch sichergestellt, dass der Steuereinrichtung die Koordinaten der normalen Position des Bezugskörpers bekannt sind, und dass dieser eine bestimmte Breite hat.

Die Erfassung von Bezugspositionen in Y- bzw. Z-Richtung wird analog wie die Erfassung einer Bezugsposition in X-Richtung durchgeführt.

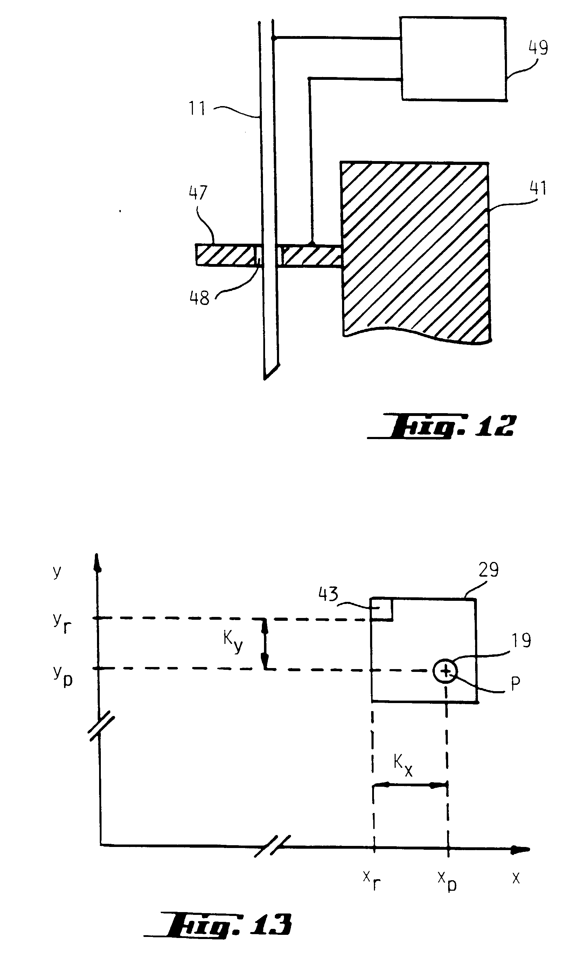

Wie anhand der Fig. 12 gezeigt, ist in einer bevorzugten Ausführungsform der erfindungsgemässen Pipettiervorrichtung einer der Bezugskörper 41-43, z: B. Bezugskörper 41, mit einem Prüfkörper 47 verbunden, der eine gerade Bohrung 48 hat, deren Durchmesser knapp etwas grösser als das Durchmesser der Pipettiernadel ist, so dass eine gerade Pipettiernadel durch die Bohrung eingeführt werden kann, ohne dass eine Berührung der Pipettiernadel mit dem Prüfkörper zustande kommt. Zur Signalisierung einer solchen Berührung ist eine elektrische Schaltung 49 vorgesehen. Diese Schaltung umfasst vorzugsweise die oben erwähnte Niveau-Fühleinrichtung, die auch bei der Abtastung der Flächen mit der Pipettiernadel verwendet wird.

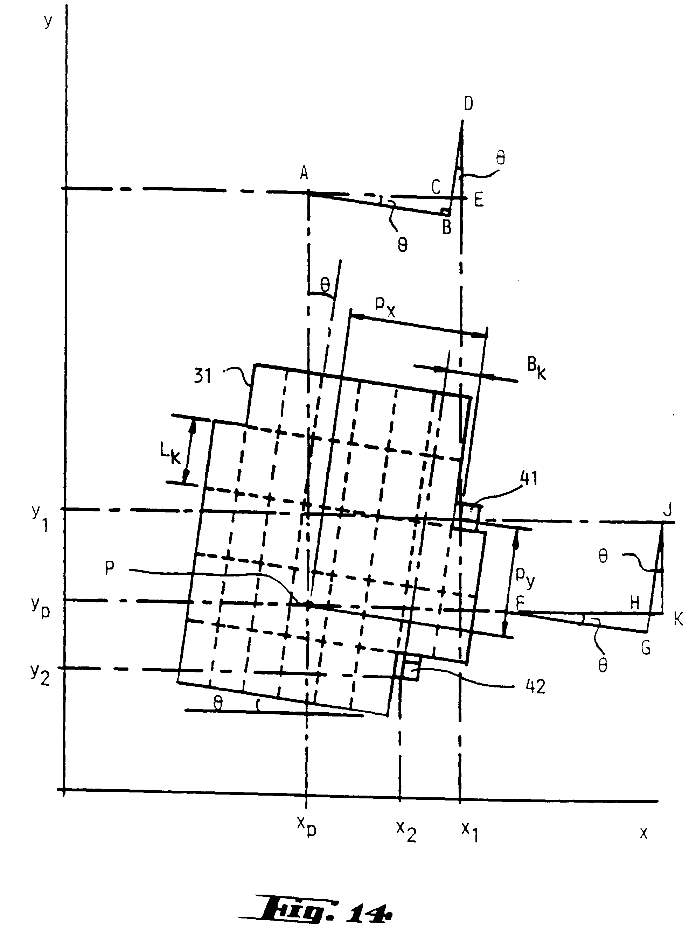

Fig. 13 zeigt eine Draufsicht der in Fig. 1 dargestellte Bearbeitungseinrichtung 29. Diese Gefässträgereinheit enthält eine Pipettierposition P, in der ein Reaktionsgefäss 19 angeordnet ist und trägt einen Bezugskörper 43, der mit der Bearbeitungseinrichtung 29 fest verbunden ist. Der Bezugskörper 43 ermöglicht, Bezugspositionen in X-, Y-und Z-Richtung zu definieren und auf diese Weise eine genaue Positionierung der Pipettiernadel 11 in der Pipettierposition P mittels der Transportvorrichtung der Pipettiernadel sicherzustellen. Im Falle der Bearbeitungseinrichtung 29 ist dafür ein einziger Bezugskörper ausreichend, weil aufgrund der strukturellen Eigenschaften des Systems davon ausgegangen werden darf, dass die Flächen 51-53 des Bezugskörpers parallel zu den Achsen des Koordinatensystems angeordnet sind, so dass keine Winkelabweichung zu berücksichtigen ist.

Die Koordinaten $x_p$, $y_p$, $z_p$ der Pipettierposition P in Fig. 13 sind wie folgt definiert:

$$x_p = x_r + K_x; \quad y_p = y_r - K_y;$$

und

$$z_p = z_r - K_z$$

worin $x_r$, $y_r$, $z_r$ die gemessenen Koordinaten der als Bezug genommenen Flächen des Bezugskörpers 43 und $K_x$, $K_y$ in Fig. 13 dargestellte Abstände sind. $K_z$ ist ein entsprechender, in Fig. 13 nicht gezeigte Abstand in Z-Richtung.

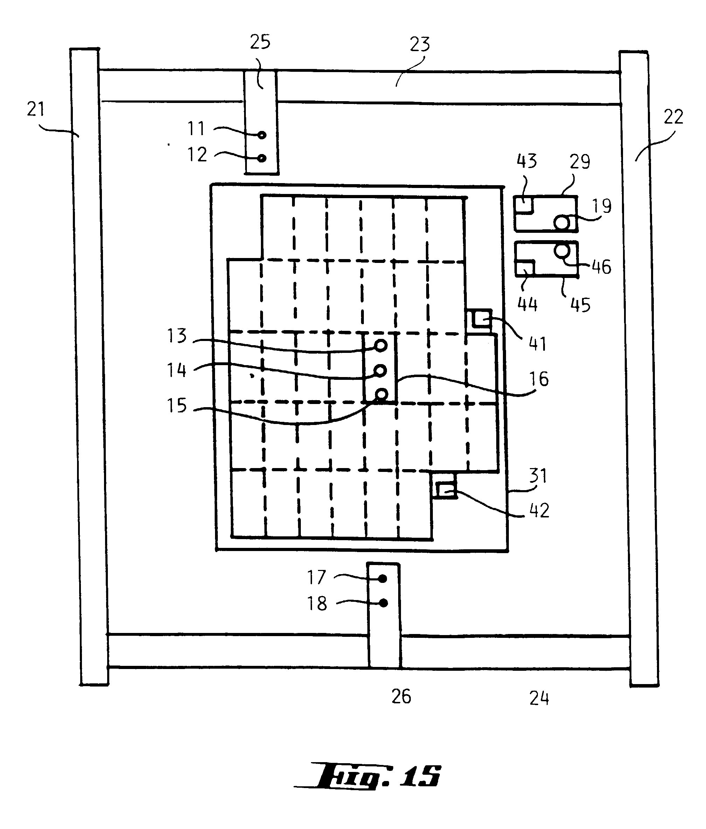

Fig. 14 zeigt eine Draufsicht der in Fig. 1 dargestellte Trägerplatte 31 in einer Position, bei der die Längsachse jedes der Gefässbehälter mit der y-Achse des Koordinatensystems der Transportvorrichtung der Pipettiernadel einen Winkel $\theta$ bildet. Eine solche Position der Trägerplatte 31 ist z.B. auf eine etwas ungenaue Anordnung der Trägerplatte 31 auf der Fläche 28 der Grundplatte 27 in Fig. 1 zurückzuführen. Die Trägerplatte 31 trägt zwei Bezugskörper 41,42.

Die durch Abtastung der Bezugskörper 41,42 mit der Pipettiernadel gemessenen Koordinaten der Bezugsflächen der Bezugskörper 41,42 in der in Fig. 14 gezeigten Position der Trägerplatte 31 sind:

| Bezugskörper | X-Koordinate | Y-Koordinate | Y-Koordinate |
|---|---|---|---|
| 41 | $x_1$ | $y_1$ | $z_1$ |
| 42 | $x_2$ | $y_2$ | $z_2$ |

Als Basis für spätere Berechnungen werden ausserdem die Koordinaten der Bezugskörper 41,42 mit der Pipettiernadel für eine Position der Trägerplatte gemessen und gespeichert, bei der der Winkel $\theta$ gleich Null ist. Diese Koordinaten sind:

| Bezugskörper | X-Koordinate | Y-Koordinate | Y-Koordinate |
|---|---|---|---|
| 41 | $\alpha_1$ | $\beta_1$ | $\gamma_1$ |
| 42 | $\alpha_2$ | $\beta_2$ | $\gamma_2$ |

Die Position der Pipettiernadel 11, bevor sie zur Pipettierung eines Volumens aus einem Primärgefass in dieses eingeführt wird, ist in Fig. 11 mit P bezeichnet. Die Koordinaten dieses Punktes sind $x_p$, $y_p$ und $z_p$.

Zur Vereinfachung der Darstellung sei zunächst angenommen, dass die Trägerplatte 31 waagrecht liegt, d.h. $z_1 = z_2$. In diesem Fall ist $z_p = z_1 - K_z$ wobei $K_z$ eine Konstante des Systems ist, die eine geeignete Positionierung der Pipettiernadel in Z-Richtung definiert, bevor die Pipettiernadel zur Durchführung der Pipettierung in das Gefäss eingeführt wird.

Die Koordinaten $x_p$ und $z_p$ lassen sich durch folgende Gleichungen berechnen:

$$x_p = x_1 - (p_x / \cos \theta) - (p_y - p_x \tan \theta) \sin \theta$$

$$y_p = y_1 - (p_y - p_x \tan \theta) \cos \theta$$

worin

$$\theta = \arc \tan U/V$$

mit

$$U = (x_1-x_2)(\beta_1-\beta_2) - (y_1-y_2)(\alpha_1-\alpha_2)$$

und

$$V = (x_1-x_2)(\alpha_1-\alpha_2) + (y_1-y_2)(\beta_1-\beta_2)$$

$p_x$ und $p_y$ sind die Abstände des Punkts P von den in Fig. 12 gezeigten Kanten des Bezugskörpers 41 in einem rechtwinkligen Koordinatensystem, dessen Ausrichtung durch den Raster zur Aufnahme der Gefässbehälter 16 auf der Trägerplatte 31 gegeben ist. Dieser Raster ist in der Fig. 12 mit gestrichelten Linien gezeichnet.

Bei der Berechnung von $x_p$ und $y_p$ wird der Durchmesser der Pipettiernadel vernachlässigt, weil er viel kleiner als $x_p$ oder $y_p$ ist.

Falls die Bedingung $z_1 = z_2$. nicht erfüllt wird, ist eine Korrektur des Wertes $z_p = z_1 - K_z$ unter Berücksichtigung der gemessenen Werte von $z_1$ und $z_2$ möglich.

In Fig. 14 wird mit $L_k$ die Länge und mit $B_k$ die Breite eines der Gefässbehälter 16 in Fig. 2 bezeichnet.

Gemäss dem Vorstehenden ermöglicht die erfindungsgemässe Justierung der Transportvorrichtung der Pipettiernadel 11 die Koordinaten der für die Pipettierung geeignete Position der Pipettiernadel genau zu berechnen auch wenn die Trägerplatte 31 etwas ungenau auf der Grundplatte 27 angeordnet wird. Anhand der berechneten Koordinaten ist die Transportvorrichtung in der Lage, die Pipettiernadel an die richtige Stelle zu bringen, d.h. gerade oberhalb des Mittelpunkts des Deckels des Primärgefässes 13, 14, 15 von dem ein bestimmtes Flüssigkeitsvolumen entnommen werden soll.

Fig. 15 zeigt eine Draufsicht einer Variante der Pipettiervorrichtung gemäss Fig. 1. In dieser Variante sind zwei gleichgebaute Transporteinrichtungen für Pipettiernadel vorgesehen, die grundsätzlich den gleichen Aufbau wie die in Fig. 1 dargestellte und oben bereits beschriebene Transporteinrichtung haben. In der Variante gemäss Fig. 15 trägt jedoch jeder der Wagen 25,26 nicht nur eine sondern zwei Pipettiernadel 11,12 bzw. 17,18. In der Variante gemäss Fig. 15 ist neben der in Fig. 1 dargestellte Bearbeitungseinrichtung 29 mit einem Reaktionsgefäss 19 eine zusätzliche Bearbeitungseinrichtung 45 vorgesehen, die ein Reaktionsgefäss 46 und einen Bezugskörper 44 trägt. Der Abstand zwischen den von einem Wagen 25,26 geführten Pipettiernadeln wird gleich dem Abstand zwischen den Pipettierpositionen der Bearbeitungseinrichtungen 29 und 45 gewählt. Es ist daher mit dieser Variante möglich, mit einer der Transfereinrichtungen gleichzeitig Reagenz zu zwei verschiedenen Reaktionsgefässen zu pipettieren.

In der oben beschriebenen Pipettiervorrichtung wird ein erfindungsgemässen Verfahren zum automatischen Transport einer Pipettiernadel einer automatischen Pipettiervorrichtung zu einer Anzahl Pipettierpositionen mittels einer Transportvorrichtung angewendet. Bei diesem Verfahren entspricht jede Pipettierposition der Position eines bestimmten Gefässes das in der Pipettiervorrichtung auf einer Gefässträgereinheit angeordnet wird, wobei die Transportvorrichtung dazu eingerichtet ist, die Pipettiernadel in drei zueinander senkrechten Richtungen X, Y, Z zu bewegen, und wobei jede dieser Richtungen parallel zu einer der Koordinatenachsen des Koordinatensystems der Transportvorrichtung ist.

Nach dem erfindungsgemässen Verfahren wird wenigstens ein Bezugskörper verwendet wird, um die Koordinaten der Pipettierpositionen für eine gegebene Lage jeder Gefässträgereinheit in der Pipettiervorrichtung zu ermitteln, und dass ebene Flächen des wenigstens einen Bezugskörper mit der Pipettiernadel abgetastet werden, um Koordinaten von Bezugspunkten zu messen.

In einer bevorzugten Ausführungsform umfasst das erfindungsgemässe Verfahren folgende Schritte:

a) Messung der Koordinaten von Bezugspunkten, die durch die Positionen der Flächen des wenigstens einen Bezugskörpers für eine gegebene Lage der Gefässträgereinheit in der Pipettiervorrichtung definiert sind, wobei zur Durchführung der Messung die Transportvorrichtung veranlasst wird, die Pipettiernadel zu jeder der Flächen der Bezugskörper zu führen, bis sie diese Fläche berührt, worauf ein Signal erzeugt wird, das diese Berührung signalisiert, und dieses Signal verwendet wird, um ein Koordinatenwert des Bezugspunkts zu erzeugen und zu speichern,

b) Berechnung der Koordinaten von jeder Pipettierposition der Pipettiernadel in Funktion der gemessenen Koordinaten der Bezugspunkte,

c) Speicherung der berechneten Koordinatenwerte jeder Pipettierposition für die gegebene Lage der Gefässträgereinheit in der Pipettiervorrichtung,

d) Verwendung der gespeicherten Koordinatenwerte jeder Pipettierposition zur Steuerung der Transportvorrichtung wenn diese zum Transport der Pipettiernadel zu einer bestimmten Pipettierposition benutzt wird.

In einer weiteren Ausführungsform, die vor allem für Pipettiervorgänge in bezug auf Pipettierpositionen geeignet ist, die über eine gewisse Fläche verteilt sind, umfasst das erfindungsgemässe Verfahren folgende Schritte:

a) Positionierung einer abnehmbaren Trägerplatte, die eine Anordnung von Gefässen und eine Anordnung von Bezugskörpern trägt, in der Pipettiervorrichtung,

b) Messung von Koordinaten von Bezugspunkten, die durch die Positionen der Flächen von wenigstens zwei Bezugskörpern für eine gegebene Lage der Trägerplatte in der Pipettiervorrichtung definiert sind, wobei zur Durchführung der Messung die Transportvorrichtung veranlasst wird, die Pipettiernadel zu Flächen der Bezugskörper zu führen, bis sie diese Flächen berührt, worauf ein Signal erzeugt wird, das diese Berührung signalisiert, und dieses Signal verwendet wird, um ein Koordinatenwert des Bezugspunkts zu erzeugen und zu speichern,

c) Berechnung der Koordinaten von jeder Pipettierposition der Pipettiernadel in Funktion der gemessenen Koordinaten der Bezugspunkte,

d) Speicherung der berechneten Koordinatenwerte jeder Pipettierposition für die gegebene Lage der Trägerplatte,

e) Verwendung der gespeicherten Koordinatenwerte jeder Pipettierposition zur Steuerung der Transportvorrichtung wenn diese zum Transport der Pipettiernadel zu einer bestimmten Pipettierposition benutzt wird.

Vor der Durchführung der soeben beschriebenen Verfahren, d.h.vor der Abtastung der Flächen des wenigstens einen Bezugskörpers mit der Pipettiernadel wird vorzugsweise eine grobe Einstellung der Transportvorrichtung der Pipettiernadel und eine Reinigung der Pipettiernadel durchgeführt. Durch diese grobe Einstellung wird der Transportvorrichtung ermöglicht, die erfindungsgemäss vorgesehene Abtastung der Bezugskörper mit der Pipettiernadel durchzuführen. Durch die Reinigung der Pipettiernadel wird sichergestellt, dass keine beim Betrieb vorkommende Verunreinigung (Schmutz, Nässe) derselbe die Zuverlässigkeit der Kontakterfassungen (Kontakt zwischen Nadel und Bezugskörper) und somit die Zuverlässigkeit der erfindungsgemässen Justierung in Frage stellen kann.

Zur groben Einstellung der Transportvorrichtung wird die Pipettiernadel zu einer Endposition in jeder der drei zueinander senkrechten Richtungen (Z, X, Y) geführt, zuerst in Z-Richtung und anschliessend in X- und Y-Richtung. Jede Endposition ist durch einen entsprechenden Anschlag definiert. Die Koordinaten jeder Endposition werden erfasst und gespeichert. Die Reinigung der Pipettiernadel umfasst das Waschen und Trocknen derselben.

Bei der Durchführung der erfindungsgemässen Abtastungen der Flächen jeder der Bezugskörper mit der Pipettiernadel wird vorzugsweise zuerst eine waagrecht angeordnete Fläche des Bezugskörpers abgetastet, um einen Bezugspunkt in vertikaler Richtung (Z-Richtung) zu erfassen. Danach werden senkrecht angeordnete Flächen des Bezugskörpers abgetastet, um Bezugspunkte in den anderen zwei Richtungen (X- bzw. Y-Richtung) zu erfassen.

Bei Pipettiereinrichtungen gemäss Fig. 15, bei denen zwei Pipettiernadel gleichzeitig geführt werden, werden sämtliche Verfahrensschritte mit Pipettiernadel durchgeführt und aufgrund der gemessenen Koordinaten der Bezugspunkte wird der Abstand zwischen den Pipettiernadeln und die Abweichung dieses Abstandes von einem Sollwert errechnet. Eine allfällige, einen Grenzwert überschreitende Abweichung wird signalisiert und dadurch gezeigt, dass eine oder beide Pipettiernadel eine unzulässig grosse Deformation aufweist. Durch eine visuelle Inspektion wird festgestellt, welche Pipettiernadel eine solche Deformation aufweist. Nach Ersatz der defekten Nadel wird das Verfahren zur Justierung der Transportvorrichtung der Pipettiernadel wiederholt.

Wie anhand der Fig. 12 gezeigt, wird in einer weiteren Variante des erfindungsgemässen Verfahrens nach der Messung der Koordinaten von Bezugspunkten die Transportvorrichtung veranlasst, die Pipettiernadel 11 durch eine gerade Bohrung 48 in einem Prüfkörper 47 zu führen, der mit einem Bezugskörper 41 so verbunden ist, dass die Position des Prüfkörpers und dadurch die Position der Bohrung durch die Position des Bezugskörpers definiert ist. Eine allfällige Berührung der Pipettiernadel mit dem Prüfkörper bei der Einführung der Pipettiernadel durch die Bohrung wird durch eine geeignete elektrische Schaltung 49 erfasst und signalisiert. Wenn bei der Einführung der Pipettiernadel durch die Bohrung keine Berührung derselben mit dem Prüfkörper signalisiert wird, wird dadurch bestätigt, dass die Pipettiernadel keine unzulässig grosse Deformation aufweist, dass die Transportvorrichtung der Pipettiernadel mit der erforderlichen Genauigkeit justiert wurde, und dass daher anzunehmen ist, dass die unmittelbar vorher durchgeführten Schritte zur Justierung der Transportvorrichtung der Pipettiernadel korrekt durchgeführt wurden. Wird hingegen bei der Einführung der Pipettiernadel durch die Bohrung eine Berührung derselben mit dem Prüfkörper signalisiert, so wird dadurch gezeigt, dass die Pipettiernadel eine unzulässig grosse Deformation aufweist und/oder dass die Genauigkeit der Justierung der Transportvorrichtung der Pipettiernadel ungenügend ist, was auf einer fehlerfaften Durchführung der unmittelbar vorher durchgeführten Schritte zur Justierung der Transportvorrichtung der Pipettiernadel schliessen lässt. Ob die Pipettiernadel eine unzulässig grosse Deformation aufweist, kann durch visuelle Inspektion festgestellt werden. Gegebenenfalls wird die defekte Pipettiernadel ersetzt und das Verfahren zur Justierung der Transportvorrichtung der Pipettiernadel wird wiederholt. Wird nach dieser Wiederholung bei der Einführung der Pipettiernadel durch die Bohrung nochmals eine Berührung der Pipettiernadel mit dem Prüfkörper signalisiert, so wird diesmal dadurch gezeigt, dass die unmittelbar vorher durchgeführten Schritte zur Justierung der Transportvorrichtung der Pipettiernadel fehlerfaft durchgeführt wurden. In diesem Fall ist eine eingehendere Suche nach der Fehlerursache erforderlich.

**Patentansprüche**

1. Pipettiervorrichtung eines automatischen Analysengerätes, welche Pipettiervorrichtung folgende Komponenten enthält:

   eine mit einer Dosiervorrichtung verbundenen Pipettiernadel (11) zur Uebertragung von einem Flüssigkeitsvolumen von einem Primärgefäss (13, 14, 15) zu einem Sekundärgefäss (19),
   wobei das Primärgefäss (13, 14, 15) bzw. das Sekundärgefäss (19) auf derselben oder auf verschiedenen Gefässträgereinheiten (31, 29) angeordnet sind,
   wobei eine der Gefässträgereinheiten (31) auf eine Arbeitsfläche des Analysengerätes positionierbar und davon abnehmbar ist,
   und wobei jedes Gefäss in bezug auf die es tragende Gefässträgereinheit eine bestimmte, eindeutig definierte Position hat,
   eine Transportvorrichtung zum gesteuerten Transport der Pipettiernadel in drei zueinander senkrechten Richtungen (X, Y, Z), und
   eine Steuereinrichtung (39) zur Steuerung der Dosiervorrichtung und der Transportvorrichtung,

   dadurch gekennzeichnet, dass in der Pipettiervorrichtung folgende zusätzliche Komponenten vorgesehen sind:

   a) wenigstens zwei verschiedene Bezugskörper (41, 42) an der einen Gefässträgereinheit (31) und wenigstens ein Bezugskörper (43) an der anderen Gefässträgereinheit (29), wobei die Bezugskörper ein Teilstück der Gefässträgereinheit (31, 29) sind oder unmittelbar und fest damit verbunden sind, und
   wobei jedes der wenigstens zwei Bezugskörper (41, 42, 43) drei zueinander senkrechte ebene Flächen (51, 52, 53) hat, die einer Abtastung mit der Pipettiernadel zugänglich sind, wobei die Position jeder solchen Fläche die Koordinate eines Bezugspunkts in einer der Transportrichtungen (X, Y, Z) definiert,
   b) eine in der Steuereinrichtung (39) enthaltene Steuerung, die dazu dient, einen Transport der Pipettiernadel zu jeder der je einen Bezugspunkt bestimmenden Flächen (51, 52 bzw. 53) der wenigstens zwei Bezugskörper (41, 42, 43) zu bewirken, und
   c) Mittel zur Erfassung eines Kontakts der Pipettiernadel (11) mit jeder der je einen Bezugspunkt bestimmenden Flächen (51, 52 bzw. 53) der wenigstens zwei Bezugskörper (41. 42, 43).

2. Pipettiervorrichtung gemäss Anspruch 1, dadurch gekennzeichnet, dass die Mittel zur Erfassung eines Kontaktes der Pipettiernadel mit einer Fläche der wenigstens zwei Bezugskörper (41, 42, 43) eine in der Pipettiervorrichtung vorhandene Niveau-Fühleinrichtung umfassen.

3. Verfahren zum automatischen Transport einer Pipettiernadel einer automatischen Pipettiervorrichtung eines automatischen Analysengerätes zu einer Anzahl Pipettierpositionen mittels einer Transportvorrichtung, wobei jede Pipettierposition der Position eines bestimmten Gefässes entspricht, das in der Pipettiervorrichtung auf einer Gefässträgereinheit angeordnet wird, welche auf eine Arbeitsfläche des Analysengerätes positionierbar und davon abnehmbar ist,
   wobei die Transportvorrichtung dazu eingerichtet ist, die Pipettiernadel in drei zueinander senkrechten Richtungen (X, Y, Z) zu bewegen, und wobei jede dieser Richtungen parallel zu einer der Koordinatenachsen des Koordinatensystems der Transportvorrichtung ist,
   dadurch gekennzeichnet, dass

   i) wenigstens zwei verschiedene Bezugskörper (41, 42, 43) verwendet werden, um die Koordinaten der Pipettierpositionen für eine gegebene Lage der Gefässträgereinheit in der Pipettiervorrichtung zu ermitteln, und dass ebene Flächen der wenigstens zwei Bezugskörper mit der Pipettiernadel abgetastet werden, um Koordinaten von Bezugspunkten zu messen, wobei die wenigstens zwei verschiedenen Bezugskörper (41, 42, 43) ein Teilstück der Gefässträgereinheit (31) sind oder unmittelbar und fest damit verbunden sind,
   wobei jedes der wenigstens zwei Bezugskörper (41, 42, 43) drei zueinander senkrechte ebene Flächen (51, 52, 53) hat, die einer Abtastung mit der Pipettiernadel zugänglich sind, wobei die Position jeder solchen Fläche die Koordinate eines Bezugspunkts in einer der Transportrichtungen (X, Y, Z) definiert, und
   ii) es folgende Schritte umfasst:

   a) Positionierung einer Gefässträgereinheit auf der Arbeitsfläche des Analysengeräts,
   b) Messung von Koordinaten von Bezugspunkten, die durch die Positionen der Flächen von wenigstens zwei Bezugskörpern für eine gegebene Lage der Gefässträgereinheit in der Pipettiervorrichtung definiert sind, wobei zur Durchführung der Messung die Transportvorrichtung veranlasst wird, die Pipettiernadel zu Flächen der Bezugskörper zu führen, bis sie diese Flächen berührt, worauf ein Signal erzeugt wird, das diese Berührung signalisiert, und dieses Signal verwendet wird, um ein Koordinatenwert des Bezugspunkts zu erzeugen und zu speichern,

c) Berechnung der Koordinaten von jeder Pipettierposition der Pipettiernadel in Funktion der gemessenen Koordinaten der Bezugspunkte,

d) Speicherung der berechneten Koordinatenwerte jeder Pipettierposition für die gegebene Lage der Gefässträgereinheit,

e) Verwendung der gespeicherten Koordinatenwerte jeder Pipettierposition zur Steuerung der Transportvorrichtung wenn diese zum Transport der Pipettiernadel zu einer bestimmten Pipettierposition benutzt wird.

4. Verfahren gemäss Anspruch 3 , dadurch gekennzeichnet, dass vor der Abtastung der Flächen der wenigstens zwei Bezugskörper mit der Pipettiernadel eine grobe Einstellung der Transportvorrichtung der Pipettiernadel und eine Reinigung der Pipettiernadel durchgeführt wird, wobei zur groben Einstellung der Transportvorrichtung die Pipettiernadel zu einer Endposition in jeder der drei zueinander senkrechten Richtungen (Z, X , Y) geführt wird und die Koordinaten jeder Endposition erfasst und gespeichert werden, und wobei die Reinigung der Pipettiernadel das Waschen und Trocknen derselben umfasst.

5. Verfahren gemäss Anspruch 3, dadurch gekennzeichnet, dass bei der Abtastung der Flächen eines Bezugskörpers mit der Pipettiernadel zuerst eine waagerecht angeordnete Fläche des Bezugskörpers abgetastet wird, um einen Bezugspunkt in vertikaler Richtung (Z-Richtung) zu erfassen, und danach senkrecht angeordnete Flächen des Bezugskörpers abgetastet werden, um Bezugspunkte in den anderen zwei Richtungen (X-bzw. Y-Richtung) zu erfassen.

6. Verfahren gemäss Anspruch 3, dadurch gekennzeichnet, dass wenn mit der Transportvorrichtung zwei Pipettiernadel gleichzeitig geführt werden, die Verfahrensschritte mit jeder Pipettiernadel durchgeführt werden, dass aufgrund der gemessenen Koordinaten der Bezugspunkte der Abstand zwischen den Pipettiernadeln und die Abweichung dieses Abstandes von einem Sollwert errechnet wird, und dass eine allfällige, einen Grenzwert überschreitende Abweichung signalisiert wird.

## Claims

1. A pipetting device of an automatic analyzer, which pipetting device contains the following components:

   a pipetting needle (11) connected to a metering device for transferring a volume of liquid from a primary vessel (13, 14, 15) to a secondary vessel (19), the primary vessel (13, 14, 15) and the secondary vessel (19) being disposed on the same or on different vessel carrying units (31, 29),

   wherein one of the vessel carrying units (31) is positionable on and removable from a working surface of the analyzer and

   wherein each vessel has a definite, uniquely defined position relative to the vessel carrying unit carrying it,

   a conveying device for the controlled conveyance of the pipetting needles in three directions (X, Y, Z) perpendicular to one another and

   a control device (39) for controlling the metering device and the conveying device,

   characterized in that the following additional components are provided in the pipetting device:

   a) at least two different reference members (41, 42) on one vessel carrying unit (31) and at least one reference member (43) on the other vessel carrying unit (29), the reference members being a part of the vessel carrying unit (31, 29) or being directly and firmly connected thereto and
   wherein each of the at least two reference members (41, 42, 43) has three flat surfaces (51, 52, 53) perpendicular to one another and accessible for scanning with the pipetting needle, the position of each said surface defining the co-ordinates of a reference point in one of the directions (X, Y, Z) of conveyance,

b) a control present in the control device (39) for conveying the pipetting needles to each of the surfaces (51, 52 or 53) defining a respective reference point on the at least two reference members (41, 42, 43) and

c) means for detecting contact between the pipetting needle (11) and each of the surfaces (51, 52 or 53) defining a respective reference point on the at least two reference members (41, 42, 43).

2. A pipetting device according to claim 1, characterized in that the means for detecting contact between the pipetting needle and a surface on the at least two reference members (41, 42, 43) comprise a level-sensing device present in the pipetting device.

3. A method for the automatic conveyance of a pipetting needle of an automatic pipetting device in an automatic analyzer to a number of pipetting positions by means of a conveying device, each pipetting position corresponding to the position of a given vessel disposed in the pipetting device on a vessel carrying unit which can be positioned on and removed from a working surface of the analyzer,
the conveying device being adapted to move the pipetting needle in three directions (X, Y, Z) perpendicular to one another and each said direction being parallel to one of the co-ordinate axes of the co-ordinate system of the conveying device,
characterized in that

(i) at least two different reference members (41, 42, 43) are used to determine the co-ordinates of the pipetting positions for a given position of the vessel carrying unit in the pipetting device and in that flat surfaces on the at least two reference members are scanned with the pipetting needle in order to measure co-ordinates of reference points, the at least two different reference members (41, 42, 43) being a component of the vessel carrying unit (31) or being directly and firmly connected thereto,
wherein each of the at least two reference members (41, 42, 43) has three flat surfaces (51, 52, 53) perpendicular to one another and accessible for scanning with the pipetting needle, the position of each said surface defining the co-ordinates of a reference point in one of the conveying directions (X, Y, Z) and

(ii) the method comprises the following steps:

a) positioning a vessel-carrying unit on the working surface of the analyzer,

b) measuring co-ordinates of reference points defined by the positions of the surfaces of at least two reference members for a given position of the vessel carrying unit in the pipetting device, wherein in order to make the measurement the conveying device is caused to convey the pipetting needle to surfaces of the reference members until it touches the said surfaces, whereupon a signal is generated indicating the said contact and the signal is used to generate and store a co-ordinate value of the reference point,

c) calculating the co-ordinates of each position of the pipetting needle in dependence on the measured co-ordinates of the reference points,

d) storing the calculated co-ordinate values of each pipetting position for the given position of the vessel-carrying unit and

e) using the stored co-ordinate values of each pipetting position for controlling the conveying device when used for conveying the pipetting needle to a given pipetting position.

4. A method according to claim 3, characterized in that, before the surfaces of the at least two reference members are scanned by the pipetting needle, a rough adjustment of the device for conveying the pipetting needle is made and the needle is cleaned, wherein for the purpose of rough adjustment of the conveying device the pipetting needle is conveyed to an end position in each of the three directions (Z, X, Y) perpendicular to one another and the co-ordinates of each end position are detected and stored, and wherein the cleaning of the pipetting needle comprises washing and drying the same.

5. A method according to claim 3, characterized in that, when the surfaces of a reference point are scanned by the pipetting needle, first a horizontally disposed surface of the reference member is scanned in order to detect a reference point in the vertical (Z) direction and then vertically disposed surfaces of the reference member are scanned in order to obtain reference points in the other two directions (X and Y).

6. A method according to claim 3, characterized in that, when two pipetting needles are simultaneously conveyed by the conveying device, the process steps are carried out with each needle and in that on the basis of the measured co-ordinates of the reference points the distance between the pipetting needles and the deviation of this distance from a set value is calculated, and any deviation exceeding a limit value is indicated.

## Revendications

1. Dispositif de pipette d'un appareil automatique d'analyse, dispositif de pipette qui contient les composants suivants:

   une aiguille (11) de pipette reliée à un dispositif de dosage pour transférer d'un récipient primaire (13, 14, 15) un volume de liquide vers un récipient secondaire (19), le récipient primaire (13, 14, 15) et le récipient secondaire (19) étant agencés sur les mêmes unités de support (31, 29) de récipient ou sur des unités différentes, l'une des unités de support (31) de récipient pouvant être positionnée sur une surface de travail de l'appareil d'analyse et en être enlevée,
   et chaque récipient possédant une position déterminée, définie univoquement par rapport à l'unité de support de récipient qui le supporte,
   un dispositif de transport pour transporter de façon commandée l'aiguille de pipette dans trois directions perpendiculaires entre elles (X, Y, Z), et
   un appareillage de commande (39) pour commander le dispositif de réglage et le dispositif de transport,

   caractérisé en ce que des composants additionnels suivants sont prévus dans le dispositif de pipette

   a) au moins deux corps de référence différents (41, 42) sur l'une (31) des unités de support de récipient et au moins un corps de référence (43) sur l'autre (29) unité de support de récipient, les corps de référence faisant partie intégrante de l'unité de support (31, 29) de récipient et lui étant donc reliés de façon immédiate et fixe; et
   chacun des au moins deux corps de référence (41, 42, 43) possédant trois surfaces planes perpendiculaires entre elles (51, 52, 53) qui sont accessibles à une exploration au moyen de l'aiguille de pipette, la position de chacune de ces surfaces définissant les coordonnées d'un point de référence dans l'une des directions de transport (X, Y, Z),
   b) une commande contenue dans l'appareillage de commande (39) qui sert à organiser un transport de l'aiguille de pipette vers chacune des surfaces (51, 52 ou 53), définissant chacune un point de référence, des au moins deux corps de références (41, 42, 43), et
   c) des moyens de détection d'un contact de l'aiguille (11) de pipette avec chacune des surfaces (51, 52 ou 53), définissant chacune un point de référence des au moins deux corps de références (41, 42, 43).

2. Dispositif de pipette selon la revendication 1, caractérisé en ce que les moyens de détection d'un contact de l'aiguille de pipette avec l'une des surfaces des au moins deux corps de référence (41, 42, 43) incluent un appareillage de sonde de niveau présent dans le dispositif de pipette.

3. Procédé de transport automatique d'une aiguille de pipette d'un dispositif automatique de pipette d'un appareil d'analyse automatique vers un certain nombre de positions d'actionnement de pipette au moyen d'un dispositif de transport, chaque position d'actionnement de pipette correspondant à la position d'un récipient défini qui est agencé dans le dispositif de pipette sur une unité de support de récipient qui peut être positionnée sur une surface de travail de l'appareil d'analyse et en être enlevée,
   le dispositif de transport étant agencé de manière à déplacer l'aiguille de pipette dans trois directions perpendiculaires entre elles (X, Y, Z), et chacune de ces directions étant parallèle à l'un des axes de coordonnées du système de coordonnées du dispositif de transport,
   caractérisé en ce que

   i) au moins deux corps de référence différents (41, 42, 43) sont utilisés pour déterminer les coordonnées des positions d'actionnement de pipette pour une condition donnée de l'unité de récipient dans le dispositif de pipette et en ce que des surfaces planes des au moins deux corps de référence sont explorées au moyen de l'aiguille de pipette afin de mesurer des coordonnées de ponts de référence, les au moins deux corps de référence différents (41, 42, 43) faisant partie intégrante de l'unité de support (31) de récipient et lui étant reliés de façon immédiate et fixe; et
   chacun des au moins deux corps de référence (41, 42, 43) possédant trois surfaces planes perpendiculaires entre elles (51, 52, 53) qui sont accessibles à une exploration au moyen de l'aiguille de pipette, la position de chacune de ces surfaces définissant les coordonnées d'un point de référence dans l'une des directions de transport (X, Y, Z),

ii) le procédé comprend les étapes consistant à:

a) positionner une unité de support de récipient sur la surface de travail de l'appareil d'analyse,

b) mesurer des coordonnées de points de référence qui sont définies par les positions des surfaces d'au moins deux corps de référence pour une condition donnée de l'unité de support de récipient dans le dispositif de pipette, le dispositif de transport étant amené pour exécuter la mesure à guider l'aiguille de pipette vers des surfaces des corps de référence jusqu'à ce qu'elle soit au contact de ces surfaces, à la suite de quoi un signal qui signalise ce contact est engendré et ce signal est utilisé pour engendrer et mémoriser une valeur de coordonnée du point de référence,

c) calculer les coordonnées de chaque position d'actionnement de pipette de l'aiguille de pipette en fonction des coordonnées mesurées des points de référence,

d) mémoriser les valeurs de coordonnées calculées de chaque position d'actionnement de pipette pour la condition donnée de l'unité de support de récipient,

e) utiliser les valeurs mémorisées de coordonnées de chaque position d'actionnement de pipette pour commander l'installation de transport lorsque celle-ci est utilisée pour transporter l'aiguille de pipette vers une position déterminée d'actionnement de pipette.

4. Procédé selon la revendication 3, caractérisé en ce qu'un réglage approximatif de l'installation de transport de l'aiguille de pipette et un nettoyage de l'aiguille de pipette sont exécutés avant l'exploration des surfaces des au moins deux corps de référence au moyen de l'aiguille de pipette, l'aiguille de pipette étant guidée pour le réglage approximatif de l'installation de transport vers une position d'extrémité dans chacune des trois directions perpendiculaires entre elles (Z, X, Y) et les coordonnées de chaque position d'extrémité étant détectées et mémorisées, et le nettoyage de l'aiguille de pipette incluant le lavage et le séchage de celle-ci.

5. Procédé selon la revendication 3, caractérisé en ce qu'une surface agencée horizontalement du corps de référence est explorée en premier lieu au moyen de l'aiguille de pipette lors de l'exploration des surfaces d'un corps de référence, afin de détecter un point de référence en direction verticale (direction Z), et que des surfaces agencées verticalement du corps de référence sont ensuite explorées, afin de détecter des points de référence dans les deux autres directions (direction X et direction Y).

6. Procédé selon la revendication 3, caractérisé en ce que, lorsque deux aiguilles de pipettes sont simultanément guidées au moyen de l'installation de transport, les étapes de procédé sont exécutées au moyen de chaque aiguille de pipette, en ce que la distance entre deux aiguilles de pipette et l'écart de cette distance par rapport à une valeur de consigne sont calculés sur la base des coordonnées mesurées des points de référence, et en ce qu'un écart éventuel qui dépasserait une valeur limite est signalisé.

**Fig. 1**

Fig. 2

Fig. 3

Fig. 4

Fig. 5

*Fig. 6*

*Fig. 7*

*Fig. 8*

*Fig. 9*

*Fig. 10*

58

57

56

55

11

11

Fig. 11

Fig. 12

Fig. 13

**Fig. 14.**

**Fig. 15**